# EUROPEAN PATENT SPECIFICATION

(11) **EP 3 176 984 B1**
(45) Date of publication and mention of the grant of the patent: **06.05.2020**
(21) Application number: 16199595.6
(22) Date of filing: 18.11.2016
(51) Int. Cl.: H04L 12/58

(54) **METHOD AND DEVICE FOR PROCESSING INFORMATION**
VERFAHREN UND VORRICHTUNG ZUR INFORMATIONSVERARBEITUNG
PROCÉDÉ ET DISPOSITIF DE TRAITEMENT D'INFORMATIONS

(30) Priority: 04.12.2015 CN 201510886330
(43) Date of publication of application: 07.06.2017
(73) Proprietor: Xiaomi Inc., Beijing 100085 (CN)
(72) Inventor: WU, Xiaoyong, Beijing, 100085 (CN); LIU, Jie, Beijing, 100085 (CN); WANG, Wei, Beijing, 100085 (CN)
(74) Representative: Hughes, Andrea Michelle

(56) References cited:
- US-A1- 2006 025 122
- US-A1- 2006 265 454
- US-A1- 2013 012 170
- US-A1- 2015 256 988

## Description

### TECHNICAL FIELD

The present disclosure generally relates to the field of communication technologies, and more particularly, to a method and device for processing information.

### BACKGROUND

With the popularity of smart phones, it is very convenient for us to make calls through phone functions, or make voice calls through instant messaging tools, such as WeChat, QQ, or the like, which brings great convenience to our communication and exchanges. However, in some bad signal environments, transmissions of voice data will be affected during communication. Monitoring communication sessions is taught in 2US 2013/012170 and US 2006/025122.

### SUMMARY

Embodiments of the present disclosure provide a method and device for processing information. Technical solutions are as follows:
According to a first aspect of embodiments of the present disclosure, there is provided a method for processing information as defined by claim 1.

Technical solutions provided by embodiments of the present disclosure may include the following advantageous effects.

The above technical solutions can cache the received voice data when the current network state is abnormal, then send the cached voice data to the receiving end when the current network state is back to normal, and thus avoid the case that parts of the voice data are lost at the receiving end due to bad network state. In particular, when contents of the instant messaging are very important, the technical solutions can also avoid that important information during the instant messaging is lost at the receiving end, and thus user experience is improved.

In one embodiment, the determining the current network state includes:
determining current network state of a sending end and a receiving end of the instant messaging; and
if the current network state of at least one end of the sending end and the receiving end of the instant messaging is abnormal, determining that the current network state is abnormal.

In the present embodiment, if the current network state of at least one end of the sending end and the receiving end is abnormal, it is determined that the current network state is abnormal, so that the voice data can be fully cached in any bad network state, and thus the case that parts of the voice data are lost at the receiving end due to bad network state can be better avoided.

In one embodiment, determining the current network state of the sending end and the receiving end of the instant messaging includes:
acquiring transmission power of the sending end or the receiving end;
determining whether the transmission power of the sending end or the receiving end is out of a preset power range;
if the transmission power of the sending end is out of the preset power range, determining that the current network state of the sending end is abnormal; and if the transmission power of the receiving end is out of the preset power range, determining that the current network state of the receiving end is abnormal.

In the present embodiment, whether the current network state is abnormal is determined by a value of the transmission power, so that the current network state can be determined accurately and quickly, and thus the efficiency of the cached voice data is improved, and the loss of the voice data is avoided.

In one embodiment, the first voice data includes at least two statements; the caching the received first voice data includes:
determining a cache queue sequence of the at least two statements according to a time sequence of the received at least two statements; and caching the first voice data according to the cache queue sequence of the at least two statements; and
the sending the first voice data to the receiving end includes:
   sending the first voice data to the receiving end according to the cache queue sequence of the at least two statements.

In the present embodiment, a cache queue sequence of a plurality of statements can be determined according to a receiving time sequence of the plurality of statements in the first voice data, and the first voice data is cached and sent according to the cache queue sequence of the plurality of statements, so that the sequence of the first voice data received at the receiving end still meets a sequence of statements input by a user, and thus the case where the delayed voice data is disordered can be avoided, and user communication experience is improved.

In the invention, if it is determined that the current network state is back to normal, the method further includes:
receiving second voice data;
determining whether voice data currently being sent exists;
if it is determined that the voice data currently being sent exists, caching the second voice data; and if it is determined that the voice data currently being sent does not exist, sending the second voice data to the receiving end.

The second voice data received after the current network state is back to normal is cached, and then the second voice data is sent after sending of the voice data currently being sent is finished, so that the sequence of the voice data received at the receiving end still meets a normal sequence of user call, and thus the case of delayed voice data disorder is avoided, and user communication experience is improved.

In the invention, if it is determined that the voice data currently being sent does not exist, sending the second voice data to the receiving end includes:
if it is determined that the voice data currently being sent does not exist, detecting a pause period during the instant messaging, wherein the pause period is a period of time in which the voice data is neither sent nor received; and
sending the second voice data during the pause period.

In the present embodiment, by sending the voice data during the pause period, the voice data delayed due to abnormal network state can move frontward, and thus the rhythm of the user call is gradually caught up, and user communication experience is improved.

In one embodiment, after caching the received first voice data, the method further includes at least one of the following steps:
if it is determined that the current network state of the sending end is abnormal, sending a first notification message to the receiving end, wherein the first notification message is used to notify the receiving end that the current network state of the sending end is abnormal, and the voice data is delayed; and
if it is determined that the current network state of the receiving end is abnormal, sending a second notification message, wherein the second notification message is used to notify the sending end that the current network state of the receiving end is abnormal, and the voice data is delayed.

In the present embodiment, notification messages can be sent respectively when the current network state of the receiving end or the sending end is abnormal, so that a user at the receiving end or the sending end can have a clear idea of the current communication situation in time, and thus user communication experience is improved.

In one embodiment, the first notification message or the second notification message is output as a voice broadcast.

In the present embodiment, the notification message is output as a voice broadcast, and thereby prompt effect on the receiving end or the sending end is improved.

According to a second aspect of embodiments of the present disclosure, there is provided a device for processing information as defined in claim 6.

In one embodiment, the determination module further includes:
a first determination sub-module configured to determine current network state of a sending end and
a receiving end of the instant messaging; and
a second determination sub-module configured to, if it is determined by the first determination sub-module that the current network state of at least one end of the sending end and the receiving end of the instant messaging is abnormal, determine that the current network state is abnormal.

In one embodiment, the first determination sub-module is configured to: acquire transmission power of the sending end or the receiving end; determine whether the transmission power of the sending end or the receiving end is out of a preset power range; if the transmission power of the sending end is out of the preset power range, determine that the current network state of the sending end is abnormal; and if the transmission power of the receiving end is out of the preset power range, determine that the current network state of the receiving end is abnormal.

In one embodiment, the first cache module includes:
a third determination sub-module configured to, when the first voice data includes at least two statements, determine a cache queue sequence of the at least two statements according to a time sequence of the received at least two statements, and cache the first voice data according to the cache queue sequence of the at least two statements; and
the first sending module includes:
   a first sending sub-module configured to send the first voice data to the receiving end according to the cache queue sequence of the at least two statements determined by the third determination sub-module.

The device further includes:
a receiving module configured to receive second voice data;
a judging module configured to, after the second voice data is received by the receiving module, determine whether voice data currently being sent exists;
a second cache module configured to, if it is determined by the judging module that the voice data currently being sent exists, cache the second voice data received by the receiving module; and
a second sending module configured to, if it is determined by the judging module that the voice data currently being sent does not exist, send the second voice data received by the receiving module to the receiving end.

The second sending module includes:
a detection sub-module configured to, if it is determined that the voice data currently being sent does not exist, detect a pause period during the instant messaging, wherein the pause period is a period of time in which the voice data is neither sent nor received; and
a second sending sub-module configured to send the second voice data during the pause period detected by the detection sub-module.

In one embodiment, the device further includes at least one of the following modules:
a third sending module configured to, if it is determined by the determination module that the current network state of the sending end is abnormal, send a first notification message to the receiving end, wherein the first notification message is used to notify the receiving end that the current network state of the sending end is abnormal, and the voice data is delayed; and
a fourth sending module configured to, if it is determined by the determination module that the current network state of the receiving end is abnormal, send a second notification message, wherein the second notification message is used to notify the sending end that the current network state of the receiving end is abnormal, and the voice data is delayed.

In one embodiment, the first notification message sent by the third sending module or the second notification message sent by the fourth sending module is output in a manner of voice broadcast.

According to a fourth aspect of embodiments of the present disclosure, there is provided a computer program, which when executing on a processor of a device, performs a method according to any one of the above methods according to a first aspect of embodiments of the present disclosure.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, are given by way of background only or illustrate embodiments consistent with the invention and, together with the description, serve to explain the principles of the invention.
Fig. 1 is a flow chart of a method for processing information.
Fig. 2 is a flow chart of step S11 in a method for processing information.
Fig. 3 is a flow chart of step S111 in a method for processing information.
Fig. 4 is a flow chart of a method for processing information.
Fig. 5 is a flow chart of a method for processing information.
Fig. 6 is a flow chart of step S54 in a method for processing information.
Fig. 7 is a flow chart of a method for processing information.
Fig. 8 is a block diagram of a device for processing information.
Fig. 9 is a block diagram of a determination module in a device for processing information.
Fig. 10 is a block diagram of a device for processing information.
Fig. 11 is a block diagram of a device for processing information.
Fig. 12 is a block diagram of a second sending module in a device for processing information.
Fig. 13 is a block diagram of a device for processing information.
Fig. 14 is a block diagram of a device for processing information.

### DETAILED DESCRIPTION

Reference will now be made in detail to exemplary embodiments, examples of which are illustrated in some of the accompanying drawings. Other drawings are shown and described by way of background. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

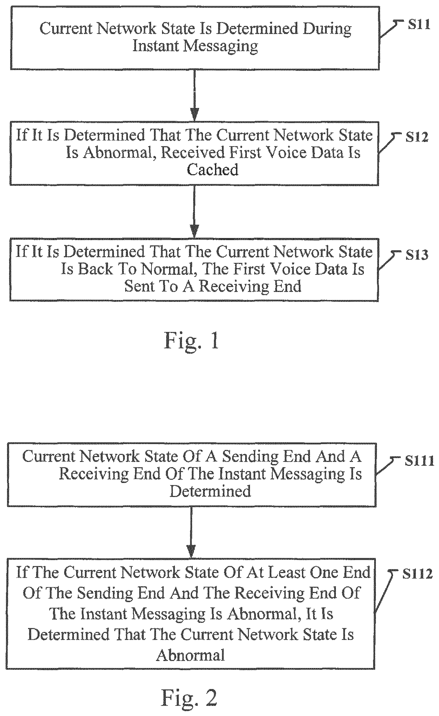

Fig. 1 is a flow chart of a method for processing information. The method for processing information is applied in a sending end, the sending end may be any one of devices having a function of instant messaging, such as a mobile phone, a computer, a digital broadcast terminal, a messaging device, a gaming console, a tablet, a medical device, exercise equipment, a personal digital assistant, and the like. As shown in Fig. 1, the method includes the following steps S11-S13.

In step S11, current network state is determined during instant messaging.

In step S12, if it is determined that the current network state is abnormal, received first voice data is cached.

In step S13, if it is determined that the current network state is back to normal, the first voice data is sent to a receiving end.

This step may also be implemented as: the first voice data is sent to the receiving end in a pause period during the instant messaging, wherein the pause period is a period of time in which the voice data is neither sent nor received.

Using the technical solutions provided by the embodiments of the present disclosure, the received voice data can be cached when the current network state is abnormal, then the cached voice data is sent to the receiving end when the current network state is back to normal, and thus the case that parts of the voice data are lost at the receiving end due to bad network state is avoided. In particular, when contents of the instant messaging are very important, the technical solutions can also avoid that important information during the instant messaging is lost at the receiving end, and thus user experience is improved.

As shown in Fig. 2, step S1 1 may be implemented as the following steps S111-S112.

In step S111, current network state of a sending end and a receiving end of the instant messaging is determined.

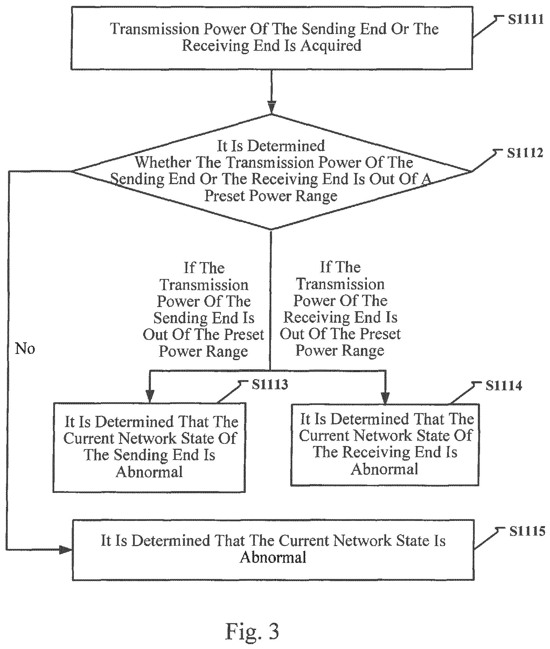

The current network state is usually determined according to signal intensity at the receiving end or the sending end. And, the signal intensity can be characterized by transmission power of a terminal. Therefore, step S111 may be implemented as steps S1111-S1115 shown in Fig. 3.

In step S1111, transmission power of the sending end or the receiving end is acquired.

In this step, since the receiving end can record the transmission power of the receiving end itself, the receiving end can send the transmission power of the receiving end to the sending end, and thus the transmission power of the receiving end is acquired by the sending end. Or, the receiving end can determine the current network state of the receiving end according to the transmission power of the receiving end itself, and send the transmission power of the receiving end itself to the sending end when the current network state of the receiving end is abnormal, and thus the transmission power of the receiving end is acquired by the sending end.

In step S1112, it is determined whether the transmission power of the sending end or the receiving end is out of a preset power range. If the transmission power of the sending end is out of the preset power range, step S1113 is performed; if the transmission power of the receiving end is out of the preset power range, step S1114 is performed; and if transmission powers of both the sending end and the receiving end are not out of the preset power range, step S1115 is performed.

In step S1113, it is determined that the current network state of the sending end is abnormal.

In step S1114, it is determined that the current network state of the receiving end is abnormal.

In step S1115, it is determined that the current network state is abnormal.

For example, the range of the preset power is set to -65dBm∼-97dBm (decibel milliwatt), if the transmission power of the terminal is within -65dBm∼-97dBm, it is determined that the current network state of the terminal is normal; otherwise, if the transmission power of the terminal is out of -65dBm∼-97dBm, it is determined that the current network state of the terminal is abnormal.

In step S112, if the current network state of at least one end of the sending end and the receiving end of the instant messaging is abnormal, it is determined that the current network state is abnormal.

That is, only when current network states of both the sending end and the receiving end of the instant messaging are normal, is it determined that the current network state is normal.

If the current network state of at least one end of the sending end and the receiving end is abnormal, it is determined that the current network state is abnormal, so that the voice data can be fully cached in any bad network state, and thus the case that parts of the voice data are lost at the receiving end due to bad network state can be better avoided.

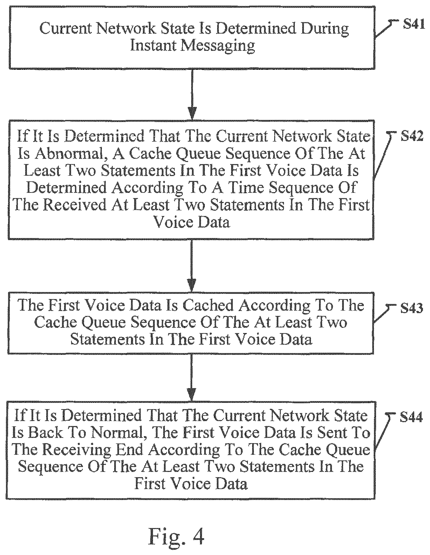

In one embodiment, the first voice data includes at least two statements. Under such condition, the above method may be further implemented as steps S41-S44 shown in Fig. 4.

In step S41, current network state is determined during instant messaging.

In step S42, if it is determined that the current network state is abnormal, a cache queue sequence of the at least two statements in the first voice data is determined according to a time sequence of the received at least two statements in the first voice data.

In step S43, the first voice data is cached according to the cache queue sequence of the at least two statements in the first voice data.

In step S44, if it is determined that the current network state is back to normal, the first voice data is sent to the receiving end according to the cache queue sequence of the at least two statements in the first voice data.

A cache queue sequence of a plurality of statements can be determined according to a receiving time sequence of the plurality of statements in the first voice data, and the first voice data is cached and sent according to the cache queue sequence of the plurality of statements, so that the sequence of the first voice data received at the receiving end still meets a sequence of statements input by a user, and thus the case where the delayed voice data is disordered can be avoided, and user communication experience is improved.

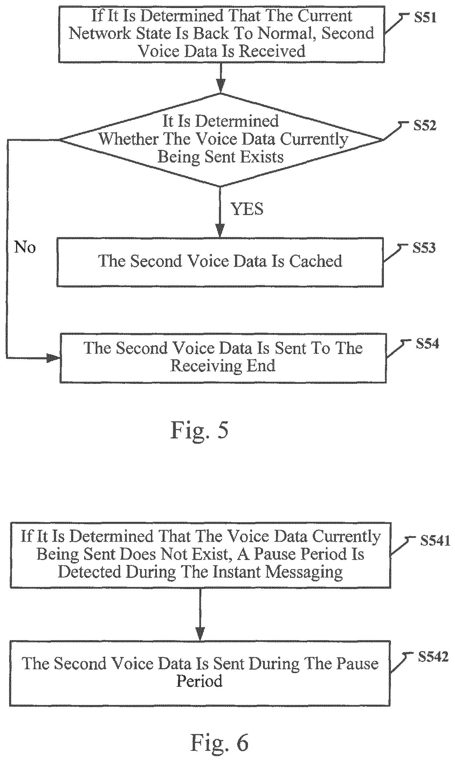

As shown in Fig. 5, the above method may further include the following steps S51-S54.

In step S51, if it is determined that the current network state is back to normal, second voice data is received.

In step S52, it is determined whether the voice data currently being sent exists. If it is determined that the voice data currently being sent exists, step S53 is performed; and if it is determined that the voice data currently being sent does not exist, step S54 is performed.

In step S53, the second voice data is cached.

In step S54, the second voice data is sent to the receiving end.

The voice data currently being sent may be the first voice data, and may also be the second voice data. For example, during the instant messaging, if it is determined that the current network state of the receiving end or the sending end is abnormal, the first voice data input by the user at this time can be cached by the sending end. If it is determined that the current network state is back to normal, the sending end can send the cached first voice data to the receiving end. While sending the first voice data, if the sending end continues to receive the second voice data input by the user, the second voice data can be cached, and then can be sent after the first voice data is sent. While sending the second voice data, if the sending end still continues to receive the second voice data input by the user, the sending end can cache the subsequent received second voice data, and then can send the cached second voice data after the second voice data currently being sent is sent.

Therefore, in the technical solution of the present embodiment, the second voice data received after the current network state is back to normal can be cached, and then the second voice data can be sent after the voice data currently being sent is sent, so that the sequence of the voice data received at the receiving end still meets a normal sequence of user call, and thus the case of delayed voice data disorder is avoided, and user communication experience is improved.

In one embodiment, the above second voice data includes at least two statements. Under such condition, step S53 may also be implemented as the following steps: a cache queue sequence of the at least two statements in the second voice data is determined according to a time sequence of the received at least two statements in the second voice data; and the second voice data is cached according to the cache queue sequence of the at least two statements in the second voice data. Correspondingly, step S54 may also be implemented as the following steps: if it is determined that the current network state is back to normal, the second voice data is sent to the receiving end according to the cache queue sequence of the at least two statements in the second voice data.

A cache queue sequence of a plurality of statements can be determined according to a receiving time sequence of the plurality of statements in the second voice data, and the second voice data is cached and sent according to the cache queue sequence of the plurality of statements, so that the sequence of the second voice data received at the receiving end still meets a sequence of statements input by a user, and thus the case where the delayed voice data is disordered can be avoided, and user communication experience is improved.

As shown in Fig. 6, step S54 may also be implemented as the following step S541-S542.

In step S541, if it is determined that the voice data currently being sent does not exist, a pause period is detected during the instant messaging, wherein the pause period is a period of time in which the voice data is neither sent nor received.

In step S542, the second voice data is sent during the pause period.

By sending the voice data during the pause period, the voice data delayed due to abnormal network state can move forward, and thus the rhythm of the user call is gradually caught up, and user communication experience is improved.

Furthermore, when the pause period is detected, if the voice data cached in the sending end includes both the first voice data and the second voice data, all the voice data can be sent to the receiving end during the pause period, and thus it is realized that all the voice data can move forward.

In one embodiment, the above method may further include the following step A1 and/or step A2.

In step A1, if it is determined that the current network state of the sending end is abnormal, a first notification message is sent to the receiving end, wherein the first notification message is used to notify the receiving end that the current network state of the sending end is abnormal, and the voice data is delayed.

The first notification message may be output in a manner of voice broadcast. For example, "call data may be delayed due to bad current signal of the other side" can be output in the form of voice.

In step A2, if it is determined that the current network state of the receiving end is abnormal, a second notification message is sent, wherein the second notification message is used to notify the sending end that the current network state of the receiving end is abnormal, and the voice data is delayed.

The second notification message may be output as a voice broadcast. For example, "call data may be delayed due to bad current signal of the other side" can be output in the form of voice.

In the present embodiment, notification messages can be sent respectively when the current network state of the receiving end and/or the sending end is abnormal, so that a user at the receiving end and/or the sending end can have a clear idea of current communication situation in time, and thus user communication experience is improved.

Hereinafter, a method for processing information provided by the present disclosure will be illustrated by an exemplary embodiment.

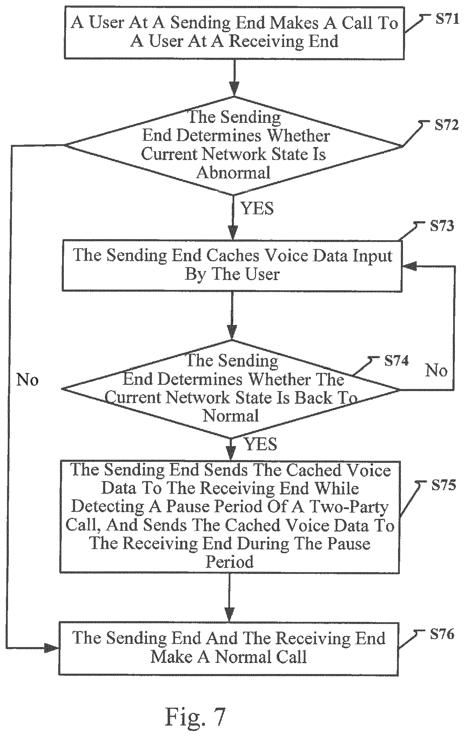

Fig. 7 is a flow chart of a method for processing information according to an exemplary embodiment. As shown in Fig. 7, the method may be applied in a sending end, and may include the following steps S71-S76.

In step S71, a user at a sending end makes a call to a user at a receiving end.

In step S72, the sending end determines whether current network state is abnormal. If the current network state is abnormal, step S73 is performed; and if the current network state is normal, step S76 is performed.

In step S73, the sending end caches voice data input by the user.

In step S74, the sending end determines whether the current network state is back to normal. If the current network state is back to normal, step S75 is performed; and if the current network state is not back to normal, step S73 is performed.

In step S75, the sending end sends the cached voice data to the receiving end while detecting a pause period of a two-party call, and sends the cached voice data to the receiving end during the pause period.

In step S76, the sending end and the receiving end make a normal call.

Using the technical solutions provided by the embodiments of the present disclosure, the received voice data can be cached when the current network state is abnormal, then the cached voice data is sent to the receiving end when the current network state is back to normal, and thus the case that parts of the voice data are lost at the receiving end due to bad network state is avoided. In particular, when contents of the instant messaging are very important, the technical solutions can also avoid that important information during the instant messaging is lost at the receiving end, and thus user experience is improved.

The following is a device embodiment of the present disclosure, which may be used to perform the method embodiment of the present disclosure.

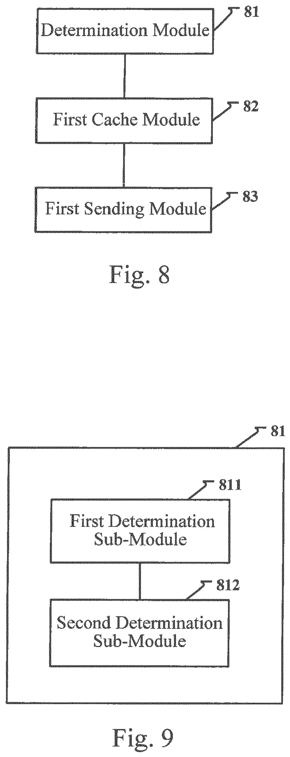

Fig. 8 is a block diagram of a device for processing information according to an exemplary embodiment. The device can be realized by software, hardware or combination thereof to be a part or all of an electronic equipment. Referring to Fig. 8, the device for processing information includes a determination module 81, a first cache module 82 and a first sending module 83.

The determination module 81 is configured to determine current network state during instant messaging.

The first cache module 82 is configured to, if it is determined by the determination module 81 that the current network state is abnormal, cache received first voice data.

The first sending module 83 is configured to, if it is determined that the current network state is back to normal, send the first voice data cached by the first cache module 82 to a receiving end.

The first sending module 83 may also be configured to send the first voice data to the receiving end in a pause period during the instant messaging, wherein the pause period is a period of time in which the voice data is neither sent nor received.

Using the technical solutions provided by the embodiments of the present disclosure, the received voice data can be cached by the first cache module 82 when the current network state is abnormal, then the cached voice data is sent to the receiving end by the first sending module 83 when the current network state is back to normal, and thus the case that parts of the voice data are lost at the receiving end due to bad network state is avoided. In particular, when contents of the instant messaging are very important, the technical solutions can also avoid that important information during the instant messaging is lost at the receiving end, and thus user experience is improved.

As shown in Fig. 9, the determination module 81 includes a first determination sub-module 811 and a second determination sub-module 812.

The first determination sub-module 811 is configured to determine current network state of a sending end and a receiving end of the instant messaging.

The second determination sub-module 812 is configured to, if it is determined by the first determination sub-module 811 that the current network state of at least one end of the sending end and the receiving end of the instant messaging is abnormal, determine that the current network state is abnormal.

That is, if current network states of both the sending end and the receiving end of the instant messaging are normal, the determination module 81 can determine that the current network state is normal.

In the present embodiment, if the current network state of at least one end of the sending end and the receiving end is abnormal, it is determined that the current network state is abnormal, so that the voice data can be fully cached in all bad network state, and thus the case that parts of the voice data are lost at the receiving end due to bad network state can be better avoided.

In one example, the first determination sub-module 811 is configured to: acquire transmission power of the sending end or the receiving end; determine whether the transmission power of the sending end or the receiving end is out of a preset power range; if the transmission power of the sending end is out of the preset power range, determine that the current network state of the sending end is abnormal; and if the transmission power of the receiving end is out of the preset power range, determine that the current network state of the receiving end is abnormal.

Since the receiving end can record the transmission power of the receiving end itself, the receiving end can send the transmission power of the receiving end to the sending end, and thus the transmission power of the receiving end is acquired by the first determination sub-module 811 of the sending end. Or, the receiving end can determine the current network state of the receiving end according to the transmission power of the receiving end itself, and send the transmission power of the receiving end itself to the sending end when the current network state of the receiving end is abnormal, and thus the transmission power of the receiving end is acquired by the first determination sub-module 811 of the sending end.

For example, the range of the preset power is set to -65dBm∼-97dBm (decibel milliwatt), if the transmission power of the terminal is within -65dBm∼-97dBm, it is determined that the current network state of the terminal is normal; otherwise, if the transmission power of the terminal is out of -65dBm∼-97dBm, it is determined that the current network state of the terminal is abnormal.

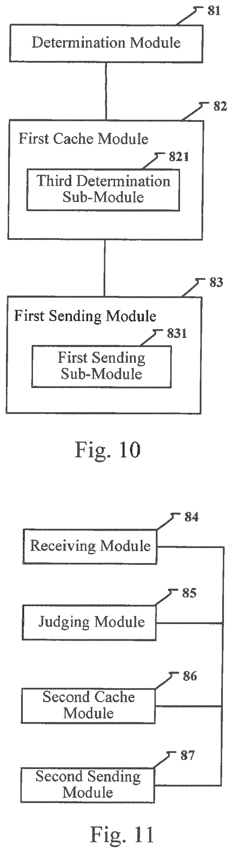

In one example, as shown in Fig. 10, the first cache module 82 includes a third determination sub-module 821. The third determination sub-module 821 is configured to, when the first voice data includes at least two statements, determine a cache queue sequence of the at least two statements according to a time sequence of the received at least two statements; and cache the first voice data according to the cache queue sequence of the at least two statements.

At this time, the first sending module 83 includes a first sending sub-module 831. The first sending sub-module 831 is configured to send the first voice data to the receiving end according to the cache queue sequence of the at least two statements determined by the third determination sub-module 821.

A cache queue sequence of a plurality of statements can be determined according to a receiving time sequence of the plurality of statements in the first voice data, and the first voice data is cached and sent according to the cache queue sequence of the plurality of statements, so that the sequence of the first voice data received at the receiving end still meets a sequence of statements input by a user, and thus the case where the delayed voice data is disordered can be avoided, and user communication experience is improved.

As shown in Fig. 11, the above device further includes a receiving module 84, a judging module 85, a second cache module 86 and a second sending module 87.

The receiving module 84 is configured to receive second voice data.

The judging module 85 is configured to, when the second voice data is received by the receiving module 84, determine whether voice data currently being sent exists.

The second cache module 86 is configured to, if it is determined by the judging module 85 that the voice data currently being sent exists, cache the second voice data received by the receiving module 84.

The second sending module 87 is configured to, if it is determined by the judging module 85 that the voice data currently being sent does not exist, send the second voice data received by the receiving module 84 to the receiving end.

In the present embodiment, the voice data currently being sent may be the first voice data, and may also be the second voice data. For example, during the instant messaging, if it is determined that the current network state of the receiving end or the sending end is abnormal, the first voice data input by the user at this time can be cached by the sending end. If it is determined that the current network state is back to normal, the sending end can send the cached first voice data to the receiving end. While sending the first voice data, if the receiving module 84 of the sending end continues to receive the second voice data input by the user, the second voice data can be cached by the second cache module 86, and then can be sent by the second sending module 87 after the first voice data is sent. While sending the second voice data, if the receiving module 84 of the sending end still continues to receive the second voice data input by the user, the sending end can cache the subsequent received second voice data by the second cache module 86, and then can send the cached second voice data by the second sending module 87 after the second voice data currently being sent is sent.

Therefore, in the present embodiment, the second voice data received after the current network state is back to normal can be cached, and then the second voice data can be sent after sending of the voice data currently being sent is finished, so that the sequence of the voice data received at the receiving end still meets a normal sequence of user call, and thus the case of delayed voice data disorder is avoided, and user communication experience is improved.

In one embodiment, when the second voice data received by the receiving module 84 includes at least two statements, the second cache module 86 is further configured to determine a cache queue sequence of the at least two statements in the second voice data according to a time sequence of the received at least two statements in the second voice data; and cache the second voice data according to the cache queue sequence of the at least two statements in the second voice data. Correspondingly, the second sending module 87 is further configured to, if it is determined that the current network state is back to normal, the second voice data is sent to the receiving end according to the cache queue sequence of the at least two statements in the second voice data.

In the present embodiment, a cache queue sequence of a plurality of statements can be determined according to a receiving time sequence of the plurality of statements in the second voice data, and the second voice data is cached and sent according to the cache queue sequence of the plurality of statements, so that the sequence of the second voice data received at the receiving end still meets a sequence of statements input by a user, and thus the case where the delayed voice data is disordered can be avoided, and user communication experience is improved.

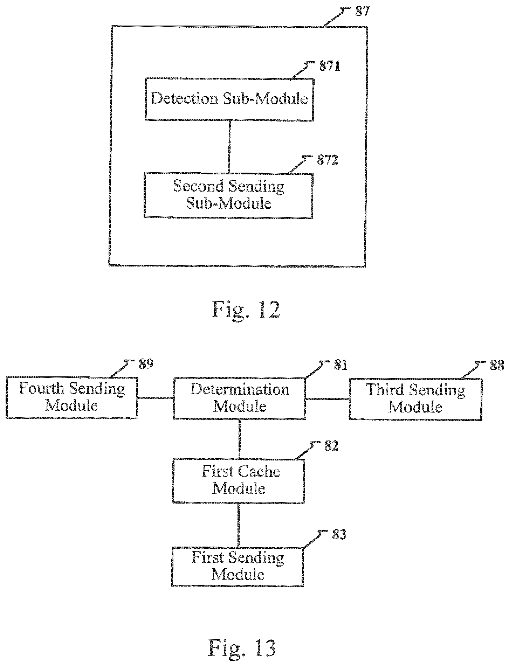

In one embodiment, as shown in Fig. 12, the second sending module 87 includes a detection sub-module 871 and a second sending sub-module 872.

The detection sub-module 871 is configured to, if it is determined that the voice data currently being sent does not exist, detect a pause period during the instant messaging, wherein the pause period is a period of time in which the voice data is neither sent nor received.

The second sending sub-module 872 is configured to send the second voice data during the pause period detected by the detection sub-module 871.

In the present embodiment, by sending the voice data through the second sending sub-module 872 during the pause period, the voice data delayed due to abnormal network state can move forward, and thus the rhythm of the user call is gradually caught up, and user communication experience is improved.

Furthermore, when the pause period is detected by the detection sub-module 871, if the voice data cached in the sending end includes both the first voice data and the second voice data, all the voice data can be sent by the second sending sub-module 872 to the receiving end during the pause period, and thus it is realized that all the voice data can move forward.

In one embodiment, as shown in Fig. 13, the above device further includes a third sending module 88 and a fourth sending module 89.

The third sending module 88 is configured to, if it is determined by the determination module 81 that the current network state of the sending end is abnormal, send a first notification message to the receiving end, wherein the first notification message is used to notify the receiving end that the current network state of the sending end is abnormal, and the voice data is be delayed.

The fourth sending module 89 is configured to, if it is determined by the determination module 81 that the current network state of the receiving end is abnormal, send a second notification message, wherein the second notification message is used to notify the sending end that the current network state of the receiving end is abnormal, and the voice data is be delayed.

In the present embodiment, notification messages can be sent respectively when the current network state of the receiving end or the sending end is abnormal, so that a user at the receiving end or the sending end can have a clear idea of current communication situation in time, and thus user communication experience is improved.

It should be understood that, the above device may further only include any one of the third sending module 88 and the fourth sending module 89.

In one embodiment, the first notification message sent by the third sending module 88 or the second notification message sent by the fourth sending module 89 is output in a manner of voice broadcast.

There is also provided a device for processing information, including:
a processor; and
a memory for storing instructions executable by the processor;
wherein the processor is configured to:
   determine current network state during instant messaging;
   if it is determined that the current network state is abnormal, cache received first voice data; and if it is determined that the current network state is back to normal, send the first voice data to a receiving end.

The above processor can be configured to:
determine current network state of a sending end and a receiving end of the instant messaging; and
if the current network state of at least one end of the sending end and the receiving end of the instant messaging is abnormal, determine that the current network state is abnormal.

The above processor can be configured to:
acquire transmission power of the sending end or the receiving end;
determine whether the transmission power of the sending end or the receiving end is out of a preset power range;
if the transmission power of the sending end is out of the preset power range, determine that the current network state of the sending end is abnormal; and if the transmission power of the receiving end is out of the preset power range, determine that the current network state of the receiving end is abnormal.

The first voice data includes at least two statements. The above processor is further configured to:
determine a cache queue sequence of the at least two statements according to a time sequence of the received at least two statements; and cache the first voice data according to the cache queue sequence of the at least two statements; and
send the first voice data to the receiving end according to the cache queue sequence of the at least two statements.

The above processor is further configured to:
if it is determined that the current network state is back to normal,
receive second voice data;
determine whether voice data currently being sent exists;
if it is determined that the voice data currently being sent exists, cache the second voice data; and if it is determined that the voice data currently being sent does not exist, send the second voice data to the receiving end.

The above processor is further configured to:
if it is determined that the voice data currently being sent does not exist, detect a pause period during the instant messaging, wherein the pause period is a period of time in which the voice data is neither sent nor received; and
send the second voice data during the pause period.

The above processor can be further configured to:
after cache the received first voice data,
if it is determined that the current network state of the sending end is abnormal, send a first notification message to the receiving end, wherein the first notification message is used to notify the receiving end that the current network state of the sending end is abnormal, and the voice data is be delayed; and
if it is determined that the current network state of the receiving end is abnormal, send a second notification message, wherein the second notification message is used to notify the sending end that the current network state of the receiving end is abnormal, and the voice data is be delayed.

The first notification message or the second notification message is output as a voice broadcast.

With respect to the devices in the above embodiments, the specific manners for performing operations for individual modules therein have been described in detail in the embodiments regarding the methods, which will not be elaborated herein.

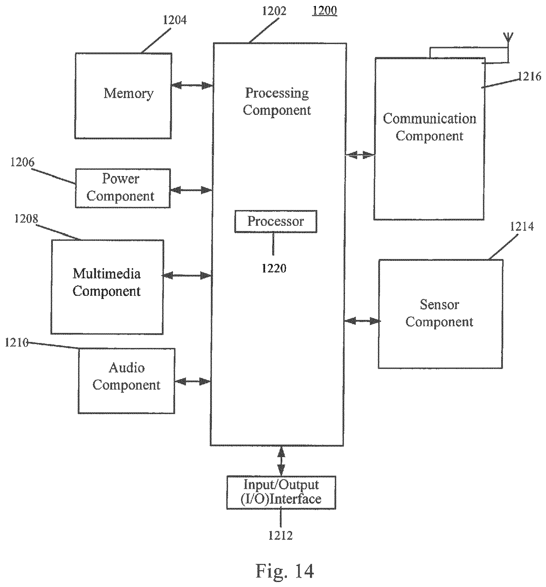

Fig. 14 is a block diagram of a device for processing information according to an exemplary embodiment. For example, the device 1200 may be a mobile phone, a computer, a digital broadcast terminal, a messaging device, a gaming console, a tablet, a medical device, exercise equipment, a personal digital assistant, and the like.

The device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

## Claims

1. A method for processing information, comprising:
determining (S11) current network state during instant messaging;
if it is determined that the current network state is abnormal, caching (S12) received first voice data; and
if it is determined that the current network state is back to normal, sending (S13) the first voice data to a receiving end; and **characterised in that**
if it is determined that the current network state is back to normal, the method further comprises:
receiving (S51) second voice data;
determining (S52)whether voice data currently being sent exists;
if it is determined that the voice data currently being sent exists, caching (S53) the second voice data; and
if it is determined that the voice data currently being sent does not exist, sending (S54) the second voice data to the receiving end; and
wherein if it is determined that the voice data currently being sent does not exist, sending (S54) the second voice data to the receiving end comprises:
if it is determined that the voice data currently being sent does not exist, detecting (S541) a pause period during the instant messaging, wherein the pause period is a period of time in which the voice data is neither sent nor received; and
sending (S542) the second voice data during the pause period.

2. The method of claim 1, wherein the determining (S11) the current network state comprises:
determining (S111) current network state of a sending end and a receiving end of the instant messaging; and
if the current network state of at least one end of the sending end and the receiving end of the instant messaging is abnormal, determining (S112) that the current network state is abnormal.

3. The method of claim 2, wherein the determining (S111) the current network state of the sending end and the receiving end of the instant messaging comprises:
acquiring (S1111) transmission power of the sending end or the receiving end;
determining (S1112) whether the transmission power of the sending end or the receiving end is out of a preset power range;
if the transmission power of the sending end is out of the preset power range, determining (S1113) that the current network state of the sending end is abnormal; and if the transmission power of the receiving end is out of the preset power range, determining (S1114) that the current network state of the receiving end is abnormal.

4. The method of claim 1, wherein the first voice data comprises at least two statements; the caching (S12) the received first voice data comprises:
determining (S42) a cache queue sequence of the at least two statements according to a time sequence of the received at least two statements; and caching (S43) the first voice data according to the cache queue sequence of the at least two statements; and
the sending (S13) the first voice data to the receiving end comprises:
sending (S44) the first voice data to the receiving end according to the cache queue sequence of the at least two statements.

5. The method of claim 2, wherein, after caching (S12) the received first voice data, the method further comprises at least one of the following steps:
if it is determined that the current network state of the sending end is abnormal, sending a first notification message to the receiving end, wherein the first notification message is used to notify the receiving end that the current network state of the sending end is abnormal, and the voice data is delayed; and
if it is determined that the current network state of the receiving end is abnormal, sending a second notification message, wherein the second notification message is used to notify the sending end that the current network state of the receiving end is abnormal, and the voice data is delayed.

6. A device for processing information, comprising:
a determination module (81) configured to determine current network state during instant messaging;
a first cache module (82) configured to, if it is determined by the determination module (81) that the current network state is abnormal, cache received first voice data; and
a first sending module (83) configured to, if it is determined that the current network state is back to normal, send the first voice data cached by the first cache module (82) to a receiving end;
and **characterised in that** the device further comprises:
a receiving module (84) configured to receive second voice data;
a judging module (85) configured to, after the second voice data is received by the receiving module (84), determine whether voice data currently being sent exists;
a second cache module (86) configured to, if it is determined by the judging module (85) that the voice data currently being sent exists, cache the second voice data received by the receiving module (84); and
a second sending module (87) configured to, if it is determined by the judging module (85) that the voice data currently being sent does not exist, send the second voice data received by the receiving module (84) to the receiving end; and
wherein the second sending module (87) comprises:
a detection sub-module (871) configured to, if it is determined that the voice data currently being sent does not exist, detect a pause period during the instant messaging, wherein the pause period is a period of time in which the voice data is neither sent nor received; and
a second sending sub-module (872) configured to send the second voice data during the pause period detected by the detection sub-module (871).

7. The device of claim 6, wherein the determination module (81) further comprises:
a first determination sub-module (811) configured to determine current network state of a sending end and a receiving end of the instant messaging; and
a second determination sub-module (812) configured to, if it is determined by the first determination sub-module (811) that the current network state of at least one end of the sending end and the receiving end of the instant messaging is abnormal, determine that the current network state is abnormal.

8. The device of claim 7, wherein the first determination sub-module (811) is configured to: acquire transmission power of the sending end or the receiving end; determine whether the transmission power of the sending end or the receiving end is out of a preset power range; if the transmission power of the sending end is out of the preset power range, determine that the current network state of the sending end is abnormal; and if the transmission power of the receiving end is out of the preset power range, determine that the current network state of the receiving end is abnormal.

9. The device of claim 6, wherein the first cache module (82) comprises:
a third determination sub-module (821) configured to, when the first voice data comprises at least two statements, determine a cache queue sequence of the at least two statements according to a time sequence of the received at least two statements, and cache the first voice data according to the cache queue sequence of the at least two statements; and
the first sending module (83) comprises:
a first sending sub-module (831) configured to send the first voice data to the receiving end according to the cache queue sequence of the at least two statements determined by the third determination sub-module (821).

10. A computer program, which when executing on a processor (1220) of a device for processing information, performs a method according to any one of claims 1-5.

11. A non-transitory computer-readable storage medium having instructions stored thereon that, when executed by a processor of a device, perform a method as claimed in any of claims 1 to 5.

## Patentansprüche

1. Verfahren zum Verarbeiten von Informationen, umfassend:
Bestimmen (S11) des aktuellen Netzwerkzustands während des Instant Messaging;
falls bestimmt wird, dass der aktuelle Netzwerkstatus anormal ist, Zwischenspeichern (S12) von empfangenen ersten Sprachdaten; und
falls bestimmt wird, dass der aktuelle Netzwerkzustand wieder normal ist, Senden (S13) der ersten Sprachdaten an ein empfangendes Ende; und **dadurch gekennzeichnet, dass**
falls bestimmt wird, dass der aktuelle Netzwerkzustand wieder normal ist, das Verfahren weiterhin umfasst:
Empfangen (S51) von zweiten Sprachdaten;
Bestimmen (S52), ob aktuell gesendete Sprachdaten vorhanden sind;
falls bestimmt wird, dass die aktuell gesendete Sprachdaten vorhanden sind, Zwischenspeichern (S53) der zweiten Sprachdaten; und
falls bestimmt wird, dass die aktuell gesendeten Sprachdaten nicht vorhanden sind, Senden (S54) der zweiten Sprachdaten an das empfangende Ende; und
wobei, falls bestimmt wird, dass die aktuell gesendeten Sprachdaten nicht vorhanden sind, das Senden (S54) der zweiten Sprachdaten an das empfangende Ende umfasst:
falls bestimmt wird, dass die aktuell gesendeten Sprachdaten nicht vorhanden sind, Erkennen (S541) einer Pausendauer während des Instant Messaging, wobei die Pausendauer eine Zeitdauer ist, in der die Sprachdaten weder gesendet noch empfangen werden; und
Senden (S542) der zweiten Sprachdaten während der Pausendauer.

2. Verfahren nach Anspruch 1, wobei das Bestimmen (S11) des aktuellen Netzwerkzustands umfasst:
Bestimmen (S111) des aktuellen Netzwerkzustands eines sendenden Endes und eines empfangenden Endes des Instant Messaging; und
falls der aktuelle Netzwerkstatus von mindestens einem Ende des sendenden Endes und des empfangenden Endes des Instant Messaging anormal ist, Bestimmen (S112), dass der aktuelle Netzwerkstatus anormal ist.

3. Verfahren nach Anspruch 2, wobei das Bestimmen (S111) des aktuellen Netzwerkzustands des sendenden Endes und des empfangenden Endes des Instant Messaging umfasst:
Erfassen (S1111) der Übertragungsleistung des sendenden oder des empfangenden Endes;
Bestimmen (S1112), ob die Übertragungsleistung des sendenden oder des empfangenden Endes außerhalb eines voreingestellten Leistungsbereichs liegt;
falls die Übertragungsleistung des sendenden Endes außerhalb des voreingestellten Leistungsbereichs liegt, Bestimmen (S1113), dass der aktuelle Netzwerkzustand des sendenden Endes anormal ist; und
falls die Übertragungsleistung des empfangenden Endes außerhalb des voreingestellten Leistungsbereichs liegt, Bestimmen (S1114), dass der aktuelle Netzwerkzustand des empfangenden Endes anormal ist.

4. Verfahren nach Anspruch 1, wobei die ersten Sprachdaten mindestens zwei Anweisungen umfassen; wobei das Zwischenspeichern (S12) der empfangenen ersten Sprachdaten umfasst:
Bestimmen (S42) einer Cache-Warteschlangensequenz der mindestens zwei Anweisungen gemäß einer Zeitsequenz der empfangenen mindestens zwei Anweisungen; und
Zwischenspeichern (S43) der ersten Sprachdaten gemäß der Cache-Warteschlangensequenz der mindestens zwei Anweisungen; und
wobei das Senden (S13) der ersten Sprachdaten an das empfangende Ende umfasst:
Senden (S44) der ersten Sprachdaten an das empfangende Ende gemäß der Cache-Warteschlangensequenz der mindestens zwei Anweisungen.

5. Verfahren nach Anspruch 2, wobei nach dem Zwischenspeichern (S12) der empfangenen ersten Sprachdaten das Verfahren weiterhin mindestens einen der folgenden Schritte umfasst:
falls bestimmt wird, dass der aktuelle Netzwerkstatus des sendenden Endes anormal ist, Senden einer ersten Benachrichtigungsnachricht an das empfangende Ende gesendet, wobei die erste Benachrichtigungsnachricht verwendet wird, um das empfangende Ende zu benachrichtigen, dass der aktuelle Netzwerkstatus des sendenden Endes anormal ist, und die Sprachdaten verzögert werden; und
falls bestimmt wird, dass der aktuelle Netzwerkstatus des empfangenden Endes anormal ist, Senden einer zweiten Benachrichtigungsnachricht, wobei die zweite Benachrichtigungsnachricht verwendet wird, um das sendende Ende zu benachrichtigen, dass der aktuelle Netzwerkstatus des empfangenden Endes anormal ist, und die Sprachdaten verzögert werden.

6. Vorrichtung zum Verarbeiten von Informationen, umfassend:
ein Bestimmungsmodul (81), das konfiguriert ist, den aktuellen Netzwerkstatus während des Instant Messaging zu bestimmen;
ein erstes Cache-Modul (82), das konfiguriert ist, falls von dem Bestimmungsmodul (81) bestimmt wird, dass der aktuelle Netzwerkzustand anormal ist, empfangene erste Sprachdaten zwischenzuspeichern; und
ein erstes Sendemodul (83), das konfiguriert ist, falls bestimmt wird, dass der aktuelle Netzwerkzustand wieder normal ist, die ersten vom ersten Cache-Modul (82) zwischengespeicherten Sprachdaten an ein empfangendes Ende zu senden;
und **dadurch gekennzeichnet, dass** die Vorrichtung weiterhin umfasst:
ein Empfangsmodul (84), das konfiguriert ist, zweite Sprachdaten zu empfangen;
ein Beurteilungsmodul (85), das konfiguriert ist, nachdem die zweiten Sprachdaten von dem Empfangsmodul (84) empfangen werden, zu bestimmen, ob aktuell gesendete Sprachdaten vorhanden sind;
ein zweites Cache-Modul (86), das konfiguriert ist, falls von dem Beurteilungsmodul (85) bestimmt wird, dass die aktuell gesendeten Sprachdaten vorhanden sind, die vom Empfangsmodul (84) empfangenen zweiten Sprachdaten zwischenzuspeichern; und
ein zweites Sendemodul (87), das konfiguriert ist, falls von dem Beurteilungsmodul (85) bestimmt wird, dass die aktuell gesendeten Sprachdaten nicht vorhanden sind, die vom Empfangsmodul (84) empfangenen zweiten Sprachdaten an das Empfangsende zu senden; und
wobei das zweite Sendemodul (87) weiterhin umfasst:
Ein Erkennungsuntermodul (871), das konfiguriert ist, falls bestimmt wird, dass die aktuell gesendeten Sprachdaten nicht vorhanden sind, einer Pausendauer während des Instant Messaging zu erkennen, wobei die Pausendauer eine Zeitdauer ist, in der die Sprachdaten weder gesendet noch empfangen werden; und
ein zweites Sendeuntermodul (872), das konfiguriert ist, die zweiten Sprachdaten während der vom Erkennungsuntermodul (871) erfassten Pausendauer zu senden.

7. Vorrichtung nach Anspruch 6, wobei das Bestimmungsmodul (81) weiterhin umfasst:
Ein erstes Bestimmungsuntermodul (811), das konfiguriert ist, den aktuellen Netzwerkzustand eines sendenden Endes und eines empfangenden Endes des Instant Messaging zu bestimmen; und
ein zweites Bestimmungsuntermodul (812), das konfiguriert ist, falls von dem ersten Bestimmungsuntermodul (811) bestimmt wird, dass der aktuelle Netzwerkzustand von mindestens einem Ende des sendenden Endes und dem empfangenden Ende des Instant Messaging anormal ist, zu bestimmen, dass der aktuelle Netzwerkstatus anormal ist.

8. Vorrichtung nach Anspruch 7, wobei das erste Bestimmungsuntermodul (811) konfiguriert ist zum: Erfassen einer Übertragungsleistung des sendenden Endes oder des empfangenden Endes; Bestimmen, ob die Übertragungsleistung des sendenden oder des empfangenden Endes außerhalb eines voreingestellten Leistungsbereichs liegt; falls die Übertragungsleistung des sendenden Endes außerhalb des voreingestellten Leistungsbereichs liegt, Bestimmen, dass der aktuelle Netzwerkstatus des sendenden Endes anormal ist; und falls die Übertragungsleistung des empfangenden Endes außerhalb des voreingestellten Leistungsbereichs liegt, Bestimmen, dass der aktuelle Netzwerkzustand des empfangenden Endes anormal ist.

9. Vorrichtung nach Anspruch 6, wobei das erste Cache-Modul (82) weiterhin umfasst:
ein drittes Bestimmungsuntermodul (821), das konfiguriert ist, wenn die ersten Sprachdaten mindestens zwei Anweisungen umfassen, eine Cache-Warteschlangensequenz der mindestens zwei Anweisungen gemäß einer Zeitsequenz der empfangenen mindestens zwei Anweisungen zu bestimmen und die ersten Sprachdaten gemäß der Cache-Warteschlangensequenz der mindestens zwei Anweisungen zwischenzuspeichern; und
das erste Sendemodul (83) weiterhin umfasst:
ein erstes Sendeuntermodul (831), das konfiguriert ist, die ersten Sprachdaten an das empfangende Ende gemäß der Cache-Warteschlangensequenz der mindestens zwei Anweisungen zu senden, die von dem dritten Bestimmungsuntermodul (821) bestimmt werden.

10. Computerprogramm, das bei Ausführung auf einem Prozessor (1220) einer Vorrichtung zum Verarbeiten von Informationen ein Verfahren nach einem der Ansprüche 1 bis 5 durchführt.

11. Nicht-transitorisches computerlesbares Speichermedium, auf dem Befehle gespeichert sind, die, wenn sie von einem Prozessor einer Vorrichtung ausgeführt werden, ein Verfahren nach einem der Ansprüche 1 bis 5 durchzuführen.

## Revendications

1. Procédé de traitement d'informations comprenant :
la détermination (S11) d'un état de réseau actuel durant une messagerie instantanée ;
s'il est déterminé que l'état de réseau actuel est anormal, la mise en cache (S12) de premières données vocales reçues ; et
s'il est déterminé que l'état de réseau actuel est à nouveau normal, l'envoi (S13) des premières données vocales à une extrémité réceptrice ; et **caractérisé en ce que**
s'il est déterminé que l'état de réseau actuel est à nouveau normal, le procédé comprend en outre :
la réception (S51) de secondes données vocales ;
la détermination (S52) si des données vocales étant actuellement envoyées existent ;
s'il est déterminé que les données vocales étant actuellement envoyées existent, la mise en cache (S53) des secondes données vocales ; et
s'il est déterminé que les données vocales étant actuellement envoyées n'existent pas, l'envoi (S54) des secondes données vocales à l'extrémité réceptrice ; et
dans lequel, s'il est déterminé que les données vocales étant actuellement envoyées n'existent pas, l'envoi (S54) des secondes données vocales à l'extrémité réceptrice comprend :
s'il est déterminé que les données vocales étant actuellement envoyées n'existent pas, la détection (S541) d'une période de pause durant la messagerie instantanée, dans lequel la période de pause est une période de temps durant laquelle les données vocales ne sont ni envoyées ni reçues ; et
l'envoi (S542) des secondes données vocales durant la période de pause.

2. Procédé selon la revendication 1, dans lequel la détermination (S11) de l'état de réseau actuel comprend :
la détermination (S111) d'un état de réseau actuel d'une extrémité émettrice et d'une extrémité réceptrice de la messagerie instantanée ; et
si l'état de réseau actuel d'au moins une extrémité parmi l'extrémité émettrice et l'extrémité réceptrice de la messagerie instantanée est anormal, la détermination (S112) que l'état de réseau actuel est anormal.

3. Procédé selon la revendication 2, dans lequel la détermination (S111) de l'état de réseau actuel de l'extrémité émettrice et l'extrémité réceptrice de la messagerie instantanée comprend :
l'acquisition (S1111) d'une puissance de transmission de l'extrémité émettrice ou l'extrémité réceptrice ;
la détermination (S1112) si la puissance de transmission de l'extrémité émettrice ou l'extrémité réceptrice est en dehors d'une plage de puissance prédéfinie ;
si la puissance de transmission de l'extrémité émettrice est en dehors de la plage de puissance prédéfinie, la détermination (S1113) que l'état de réseau actuel de l'extrémité émettrice est anormal ; et si la puissance de transmission de l'extrémité réceptrice est en dehors de la plage de puissance prédéfinie, la détermination (S1114) que l'état de réseau actuel de l'extrémité réceptrice est anormal.

4. Procédé selon la revendication 1, dans lequel les premières données vocales comprennent au moins deux énoncés; la mise en cache (S12) de premières données vocales reçues comprend :
la détermination (S42) d'une séquence de file d'attente de mise en cache des au moins deux énoncés en fonction d'une séquence temporelle des au moins deux énoncés reçus ; et la mise en cache (S43) des premières données vocales en fonction de la séquence de file d'attente de mise en cache des au moins deux énoncés ; et
l'envoi (S13) des premières données vocales à l'extrémité réceptrice comprend :
l'envoi (S44) des premières données vocales à l'extrémité réceptrice en fonction de la séquence de file d'attente de mise en cache des au moins deux énoncés.

5. Procédé selon la revendication 2, dans lequel, après la mise en cache (S12) des premières données vocales reçues, le procédé comprend en outre au moins une des étapes suivantes :
s'il est déterminé que l'état de réseau actuel de l'extrémité émettrice est anormal, l'envoi d'un premier message de notification à l'extrémité réceptrice, dans lequel le premier message de notification est utilisé pour notifier à l'extrémité réceptrice que l'état de réseau actuel de l'extrémité émettrice est anormal, et les données vocales sont retardées ; et
s'il est déterminé que l'état de réseau actuel de l'extrémité réceptrice est anormal, l'envoi d'un second message de notification, dans lequel le second message de notification est utilisé pour notifier à l'extrémité émettrice que l'état de réseau actuel de l'extrémité réceptrice est anormal, et les données vocales sont retardées.

6. Dispositif de traitement d'informations comprenant :
un module de détermination (81) configuré pour déterminer un état de réseau actuel durant une messagerie instantanée ;
un premier module de mise en cache (82) configuré pour, s'il est déterminé par le module de détermination (81) que l'état de réseau actuel est anormal, mettre en cache des premières données vocales reçues ; et
un premier module d'envoi (83) configuré pour, s'il est déterminé que l'état de réseau actuel est à nouveau normal, envoyer les premières données vocales mises en cache par le premier module de mise en cache (82) à une extrémité réceptrice ;
et **caractérisé en ce que** le dispositif comprend en outre :
un module de réception (84) configuré pour recevoir des secondes données vocales ;
un module de jugement (85) configuré pour, après que les secondes données vocales sont reçues par le module de réception (84), déterminer si des données vocales étant actuellement envoyées existent ;
un second module de mise en cache (86) configuré pour, s'il est déterminé par le module de jugement (85) que les données vocales étant actuellement envoyées existent, mettre en cache les secondes données vocales reçues par le module de réception (84) ; et
un second module d'envoi (87) configuré pour, s'il est déterminé par le module de jugement (85) que les données vocales étant actuellement envoyées n'existent pas, envoyer les secondes données vocales reçues par le module de réception (84) à l'extrémité réceptrice ; et
dans lequel le second module d'envoi (87) comprend :
un sous-module de réception (871) configuré pour, s'il est déterminé que les données vocales étant actuellement envoyées n'existent pas, détecter une période de pause durant la messagerie instantanée, dans lequel la période de pause est une période de temps durant laquelle les données vocales ne sont ni envoyées ni reçues ; et
un second module d'envoi (872) configuré pour envoyer les secondes données vocales durant la période de pause détectée par le sous-module de réception (871).

7. Dispositif selon la revendication 6, dans lequel le module de détermination (81) comprend en outre :
un premier sous-module de détermination (811) configuré pour déterminer un état de réseau actuel d'une extrémité émettrice et d'une extrémité réceptrice de la messagerie instantanée ; et
un deuxième sous-module de détermination (812) configuré pour, s'il est déterminé par le premier sous-module de détermination (811) que l'état de réseau actuel d'au moins une extrémité parmi l'extrémité émettrice et l'extrémité réceptrice de la messagerie instantanée est anormal, déterminer que l'état de réseau actuel est anormal.

8. Dispositif selon la revendication 7, dans lequel le premier sous-module de détermination (811) est configuré pour : acquérir une puissance de transmission de l'extrémité émettrice ou l'extrémité réceptrice ; déterminer si la puissance de transmission de l'extrémité émettrice ou l'extrémité réceptrice est en dehors d'une plage de puissance prédéfinie ; si la puissance de transmission de l'extrémité émettrice est en dehors de la plage de puissance prédéfinie, déterminer que l'état de réseau actuel de l'extrémité émettrice est anormal ; et si la puissance de transmission l'extrémité réceptrice est en dehors de la plage de puissance prédéfinie, déterminer que l'état de réseau actuel de l'extrémité réceptrice est anormal.

9. Dispositif selon la revendication 6, dans lequel le premier module de mise en cache (82) comprend :
un troisième sous-module de détermination (821) configuré pour, quand les premières données vocales comprennent au moins deux énoncés, déterminer une séquence de file d'attente de mise en cache des au moins deux énoncés en fonction d'une séquence temporelle des au moins deux énoncés reçus et mettre en cache des premières données vocales en fonction de la séquence de file d'attente de mise en cache des au moins deux énoncés ; et
le premier module d'envoi (83) comprend :
un premier sous-module d'envoi (831) configuré pour envoyer les premières données vocales à l'extrémité réceptrice en fonction de la séquence de file d'attente de mise en cache des au moins deux énoncés déterminés par le troisième sous-module de détermination (821).

10. Programme informatique qui, quand il est exécuté sur un processeur (1220) d'un dispositif de traitement d'informations, réalise un procédé selon l'une quelconque des revendications 1 à 5.

11. Support de stockage lisible par ordinateur non transitoire ayant des instructions stockées dessus qui, quand elles sont exécutées par un processeur d'un dispositif, réalisent un procédé selon l'une quelconque des revendications 1 à 5.
